# EUROPEAN PATENT SPECIFICATION

(11) **EP 1 612 381 B1**
(45) Date of publication and mention of the grant of the patent: **10.08.2011**
(21) Application number: 05105818.8
(22) Date of filing: 29.06.2005
(51) Int. Cl.: F01N 3/20, B01D 53/94

(54) **Device and method for injecting a liquid into a gas stream, and vehicle exhaust gas treatment system incorporating the device**
Vorrichtung und Verfahren zum Injizieren von Flüssigkeit in einen Gasstrom, und die Vorrichtung aufweisendes System zur Abgasbehandlung von Fahrzeugen
Dispositif et procédé pour injecter un liquide dans un courant de gaz, et système de traitement de gaz d'échappement d'un véhicule contenant ce dispositif

(30) Priority: 30.06.2004 IT MI20041318
(43) Date of publication of application: 04.01.2006
(73) Proprietor: IVECO S.p.A., 10156 Torino (IT)
(72) Inventor: Dellora, Giancarlo, 10129, Torino (IT); Schmidt, Klaus-Dieter, 8280, Kreuzlingen (CH)
(74) Representative: Borsano, Corrado

(56) References cited:
- EP-A- 0 928 884
- EP-A- 1 236 499
- DE-A- 10 047 512
- DE-A- 19 947 198
- JP-A- 4 114 727
- US-A- 6 041 594
- US-A1- 2002 038 542
- US-B1- 6 273 120
- US-B1- 6 301 879

## Description

### SCOPE OF THE INVENTION

This invention relates to a device and a method for injecting a liquid, in particular for injecting a urea solution into a gas stream, in particular into the exhaust gas stream in a diesel engine.

### PRIOR ART

A problem that is very felt in the field of internal combustion engines, in particular with diesel engines, whether turbocharged or not, is the formation of nitrogen oxides during combustion. The nitrogen oxides are discharged with the engine exhaust gases and represent one of the main pollutants. Although several solutions have been developed to reduce the formation of these compounds, nitrogen oxide levels in exhaust emissions continue to be too high and, also in view of the need to comply with stricter emissions standards, systems must be used that are capable of abating nitrogen oxides in exhaust gases. One such solution is the SCR (Selective Catalytic Reduction) system; this system is based on the reaction, promoted by an appropriate catalytic system, between the nitrogen oxides in the exhaust gases and ammonia that is introduced as a reducing agent. The ammonia is usually generated from the hydrolysis of urea suitably supplied with appropriate dosing systems, by means of an air stream suitably supplied.

One proposed method of supplying urea to the exhaust gas stream in a vehicle equipped with the SCR system comprises picking up the urea (usually in an aqueous solution) from an appropriate tank using a dosing pump and supplying said urea continuously to a suitable mixing chamber, where the urea by means of suitable means is vaporized and mixed with an air stream supplied by an appropriate compressor. The mixing chamber is usually close to the point at which the air-urea mixture is introduced into the exhaust gas duct, which is obviously upstream of the structures containing the catalytic converters where, under the right temperature conditions, the various chemical reactions take place to abate the nitrogen oxides contained in the exhaust gases. The urea can be filtered through a filter, generally placed upstream of the pump. Appropriate methods are used to heat the tank, pipes and pump in order to maintain the urea at the right temperature. The actual rate at which the urea is supplied depends on the pressure downstream of the dosing pump.

This type of solution requires the dosing pump to operate continuously as long as the engine is running. Under such operating conditions the pump will often deteriorate and break within a short time, compared to the average life of a vehicle. Moreover, the pressure downstream of the pump depends on the condition of the pump and filter. It is therefore very difficult to regulate the pressure and thus guarantee the correct urea flow rate.

EP 1 236 499 describes a SCR apparatus wherein the solution is pumped from a storage tank into a bellow provided in a membrane tank, while the latter is vented. After filling the bellow the membrane tank is pressurised and the liquid from the bellow flows to an injection system to be supplied to exhaust gas. This apparatus requires separate phases for injection and filling of the bellow.

EP 0928884 describes a device comprising a storage vessel and a supply container connected between each other by means of a line having a check valve, thanks to which the liquid can flow only from the vessel to the container. Both the vessel and the container are pressurized by an air compressed source. The container is connected to the air compressed source by means of a second valve. When the liquid in the container falls under minimum level, said second valve connects the container with a discharge line, so as the container pressure reaches the atmospheric pressure and the check valve opens due to a difference of pressure between the two tanks.

### SUMMARY OF THE INVENTION

The problems described above have now been solved with a device for supplying a liquid to a gas stream in the exhaust gas manifold of an internal combustion engine according to claim 1.

Said means for supplying compressed gas comprise a pressure regulating system.

The means for injecting the liquid comprise a suitable mixing chamber, equipped with a gas supply line. Said means are connected, for example by means of a specific line, to said supply tank.

The present invention also relates to the exhaust gas treatment system in a vehicle, in particular in a vehicle with a diesel engine, comprising a manifold for the exhaust gases coming from an internal combustion engine, an exhaust gas treatment unit installed on said manifold, wherein said unit can be for example a catalytic converter, a device as described above, in which the means for injecting the liquid are suitable for introducing the liquid into said manifold, upstream of the exhaust gas treatment unit.

According to a particular aspect of the invention, the liquid is a urea solution, and the exhaust gas treatment unit is a catalytic converter to abate the nitrogen oxides, preferably of the SCR type; the compressed gas may be air, for example, coming from an appropriate source.

The invention also relates to a vehicle equipped with a diesel engine and the unit as described above.

The present invention also relates to a method for supplying a liquid to a gas stream, in the exhaust gas manifold of an internal combustion engine, as defined in claim 10.

This invention refers in particular to that set forth in the claims, which are attached hereto.

### LIST OF DRAWINGS

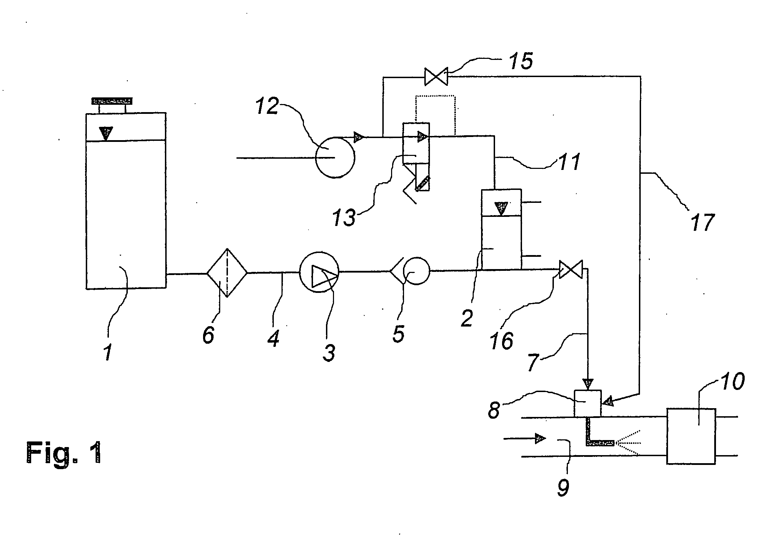

This invention will now be illustrated through a detailed description preferred but not exclusive embodiments, provided merely by way of example, with the aid of figure 1 attached hereto, which illustrates the layout of a system according to one aspect of this invention.

### DETAILED DESCRIPTION

Figure 1 schematically shows a system according to one aspect of the present invention, particularly suitable for injecting a liquid, such as a liquid reagent, into the exhaust gas manifold of an internal combustion engine, in particular of a diesel engine for an industrial vehicle, for example a urea solution to be introduced upstream of an SCR catalytic converter. In particular a system is shown for supplying a urea solution to an engine exhaust gas stream. Preferred urea solutions are aqueous solutions with between 10 and 60% urea by weight, more preferably eutectic solutions (32.5 by weight). There is a storage tank 1 of a suitable capacity (for example, industrial vehicles usually require tanks of between 50 and 100 liters, which are usually compatible with the amount of solution that is needed to cover several thousand kilometers) and a supply tank 2, that preferably has a smaller capacity that the storage tank, for example between 0.5 and 2 liters. There is a pump 3 for transferring the solution from the storage tank to the supply tank. The pump is located on the transfer line 4 that connects the two tanks. Preferably a check valve 5 is provided. According to a preferred embodiment, the pump is activated to restore the level in the supply tank 2 when this falls below a minimum level. The line 4 may comprise other devices, for example an appropriate type of filter 6, preferably located upstream of the pump. The liquid injection line 7 connects the supply tank 2 with the mixing chamber 8, where the solution is vaporized and mixed with a stream of compressed gas (in the case in the example this gas is air), before being introduced into the internal combustion engine exhaust gas manifold 9, upstream of the unit 10 that may be an SCR catalytic converter.

The devices for supplying a compressed gas to the supply tank 2 comprises a compressed gas supply line (in the case in the example this gas is air) 11 that connects the supply tank 2 with a source 12 of compressed gas, such as a specific compressor, or a compressed gas distribution line, such as a compressed air distribution system that may be installed in an industrial vehicle and also used for other purposes. The reason for supplying the compressed gas to the supply tank 2 is to maintain the pressure in said tank at each moment to a predetermined level according to the amount of liquid to be introduced into the manifold, regardless of the instantaneous flow rate supplied by the pump 3. In fact, according to the invention, the flow rate of the liquid supplied to the manifold 9 is regulated by varying the pressure of the liquid upstream of the line 7 and of the mixing chamber 8. The liquid flow rate can be calculated on the basis of said pressure.

The means used to supply compressed gas comprise a pressure regulating system, suitable for maintaining the required pressure in the supply tank. According to a preferred embodiment said pressure regulating system is an air pressure valve 13 suitable for regulating the pressure downstream of the valve, controlled by a specific control circuit. According to a preferred embodiment, said valve is an on-off valve, for example a solenoid valve or a pneumatic valve, that regulates the pressure by means of opening and closing phases, the length and frequency of which are governed as necessary. If deemed appropriate, there may also be devices for venting the pressure from the supply tank 2, such as an appropriate valve, in order to enable rapid adjustment of the rate at which the liquid is injected into the manifold 9 when there is a drop in demand.

There is also a system, such as an appropriate line 17, for introducing compressed gas into the mixing chamber 8, where the liquid is vaporized and mixed with the gas by means of methods known in the prior art, for example using nozzles, baffles... The line 17 incorporates flow regulating devices such as a valve 15. The line 17 may connect the mixing chamber 8 with an appropriate source, that may, according to one aspect of this invention, be the same as that of the gas to be pressurized in the supply tank 2.

Unlike conventional systems, the system described above eliminates the need to operate the pump continuously for as long as liquid must be supplied to the manifold, in this example while the internal combustion engine is running; the pump may be actuated by means of an appropriate level control system fitted to the supply tank 2 and only starts pumping when the level in the tank falls below a certain value, stopping once the predefined level is reached. The pump may be of any kind that is considered suitable, whether of the positive-displacement type or not. Given the type of operation, standard pumps can be used, which are usually more economical than those used in conventional systems, where continuous use leads to problems in terms of shorter pump life. Moreover, the method used to pressurize the supply tank means that the pressure (and the actual rate at which the liquid is supplied) is not affected by the condition (such as wear) of the pump, and the flow rate can therefore be regulated for the entire life of the pump, eliminating the need for any additional flow regulation devices on the transfer line 4, or frequent pump replacement. If necessary, (for example if the type of pump that is used allows the liquid to flow back when not in use) suitable means can be used to prevent the liquid from flowing from the supply tank 2 to the storage tank 1, for example a valve that shuts off the line 4 when the pump is stopped. Said valve may be adjustable or automatic and may be, for example, a suitable check valve.

Preferably the line 7 incorporates an on-off valve 16, to block the flow of liquid when the system is not in use, for example when the engine is not running. This is because, as described above, the supply tank 2 is pressurized.

A further advantage of the system described above is apparent when it is used to introduce reagents to treat vehicle engine exhaust gases, such as when dosing urea in SCR systems, as described above. In fact conventional systems usually require complex heating systems to heat the urea tank, as this solution may freeze at low temperatures. When the vehicle is started after being exposed to low temperatures, it takes a long time to heat the solution before the system can become operational. Thanks to the use of a small supply tank the heating system can be of a type capable of heating the solution in the tank quickly, so that the system is operational within a short time from starting the vehicle. The solution in the tank is sufficient for a long journey (for example one liter of solution may be enough for 50-100 km) during which time the rest of the solution in the storage tank 1 can be heated, since by that time the vehicle will have been running for some time. In that connection, the following operation is possible: when the engine is switched off, and the on-off valve 16 closes, the pump automatically restores anyway the solution in the supply tank 2 to the maximum level, to have a quantity of solution that can be heated quickly the next time the engine is started.

## Claims

1. Device for supplying a liquid to a gas stream in the exhaust gas manifold of an internal combustion engine comprising:
- a storage tank (1) and a supply tank (2) for said liquid;
- a pump (3) for transferring said liquid from the storage tank to the supply tank, said pump (3) being located on a transfer line (4) connecting the two tanks;
- means (11, 12) for supplying a compressed gas to said supply tank comprising
- a compressed gas source (12),
- a compressed gas supply line (11) connecting the supply tank (2) with the compressed gas source (12)
- means (7, 8, 17) for injecting said liquid into a gas manifold (9) comprising
- a mixing chamber (8), where said liquid is vaporized and mixed with said compressed gas,
- an injection line (7) connecting the supply tank (2) with the mixing chamber (8),
- a line (17) for introducing said compressed gas into the mixing chamber (8),
- gas flow regulating devices (15) incorporated in said line (17)
- means for preventing liquid from flowing from the supply tank (2) to the storage tank (1)
**characterized in that** said means for supplying said compressed gas to said supply tank further comprise pressure regulating means (13) configured for maintaining the pressure in said supply tank at each moment to a predetermined level according to the amount of liquid to be introduced into the manifold (9), regardless of the instantaneous flow rate supplied by the pump (3).

2. Device according to claim 1, further comprising an on-off valve (16) incorporated in said injection line (7) to block the flow of liquid when the system is not in use.

3. Device according to claim 1, wherein said means for preventing liquid from flowing from the supply tank (2) to the storage tank (1) are a check valve (5).

4. Device according to claim 1, wherein said supply tank (2) comprises a valve for venting the pressure from the supply tank (2).

5. Device according to any of the preceding claims, wherein said liquid is urea and/or said gas is air.

6. Device according to any of the preceding claims, wherein said flow regulating devices (15) is a valve.

7. Device according to any of the preceding claims, wherein said pressure regulating system is an air pressure valve (13) controlled by a specific control circuit.

8. Vehicle exhaust gas treatment system comprising a manifold (9) for collecting the exhaust gases from an internal combustion engine, an exhaust gas treatment unit (10) arranged on said manifold, **characterized by** comprising a device according to any of the previous claims, in which the liquid injection means are suitable for feeding the liquid into said manifold, upstream of the exhaust gas treatment unit.

9. Vehicle according to claim 8, wherein said exhaust gas treatment unit (10) is an SCR catalytic converter, said device is suitable for injecting a urea solution, and the compressed gas is compressed air.

10. Method for supplying a liquid to a gas stream in the exhaust gas manifold of an internal combustion engine having an exhaust gas manifold (9) by means of a device according to any of the claims from 1 to 7 comprising
- pumping said liquid into the supply tank (2),
- maintaining the pressure in said tank at each moment to a predetermined level according to the amount of liquid to be introduced into the manifold, regardless of the instantaneous flow rate supplied by the pump (3).
- injecting said liquid into said gas stream.

11. Method according to claim 10, comprising the step of activating the pump by means of an appropriate level control system fitted to the supply tank (2) and only starts pumping when the level in the tank falls below a certain value, stopping once the predefined level is reached.

## Patentansprüche

1. Vorrichtung zum Liefern einer Flüssigkeit an einen Gasstrom in dem Abgaskrümmer eines Verbrennungsmotors, umfassend:
- einen Speichertank (1) und einen Liefertank (2) für die Flüssigkeit;
- eine Pumpe (3) zum Übertragen der Flüssigkeit von dem Speichertank an den Liefertank, wobei die Pumpe (3) an einer die beiden Tanks verbindenden Übertragungsleitung (4) angeordnet ist;
- ein Mittel (11, 12) zur Lieferung eines Druckgases an den Liefertank, umfassend:
- eine Druckgasquelle (12),
- eine Druckgaslieferleitung (11), die den Liefertank (2) mit der Druckgasquelle (12) verbindet;
- ein Mittel (7, 8, 17) zur Injektion der Flüssigkeit in einen Gaskrümmer (9), umfassend:
- eine Mischkammer (8), in der die Flüssigkeit verdampft und mit dem Druckgas gemischt wird,
- eine Injektionsleitung (7), die den Liefertank (2) mit der Mischkammer (8) verbindet,
- eine Leitung (17) zum Einführen des Druckgases in die Mischkammer (8),
- Gasströmungsregulierungsvorrichtungen (15), die in der Leitung (17) enthalten sind,
- ein Mittel, um zu verhindern, dass Flüssigkeit von dem Liefertank (2) zu dem Speichertank (1) strömt,
**dadurch gekennzeichnet, dass**
das Mittel zum Liefern des Druckgases an den Liefertank ferner ein Druckregulierungsmittel (13) umfasst, das zur Beibehaltung des Drucks in dem Liefertank zu jedem Zeitpunkt auf einem vorbestimmten Pegel gemäß der Menge an in den Krümmer (9) einzuführender Flüssigkeit ungeachtet des augenblicklichen Durchflusses, der durch die Pumpe (3) geliefert wird, konfiguriert ist.

2. Vorrichtung nach Anspruch 1,
ferner mit einem Ein-Aus-Ventil (16), das in der Injektionsleitung (7) enthalten ist, um die Strömung von Flüssigkeit zu blockieren, wenn das System nicht in Gebrauch ist.

3. Vorrichtung nach Anspruch 1,
wobei das Mittel, um zu verhindern, dass Flüssigkeit von dem Liefertank (2) zu dem Speichertank (1) strömt, ein Rückschlagventil (5) ist.

4. Vorrichtung nach Anspruch 1,
wobei der Liefertank (2) ein Ventil zum Entlüften des Drucks von dem Liefertank (2) umfasst.

5. Vorrichtung nach einem der vorhergehenden Ansprüche,
wobei die Flüssigkeit Harnstoff ist und/oder das Gas Luft ist.

6. Vorrichtung nach einem der vorhergehenden Ansprüche,
wobei die Strömungsregulierungsvorrichtungen (15) ein Ventil sind.

7. Vorrichtung nach einem der vorhergehenden Ansprüche,
wobei das Druckregulierungssystem ein Luftdruckventil (13) ist, das durch eine spezifische Steuerschaltung gesteuert ist.

8. Fahrzeugabgasbehandlungssystem, mit einem Krümmer (9) zum Sammeln der Abgase von einem Verbrennungsmotor, einer Abgasbehandlungseinheit (10), die an dem Krümmer angeordnet ist, **dadurch gekennzeichnet, dass**
eine Vorrichtung nach einem der vorhergehenden Ansprüche enthalten ist, bei der das Flüssigkeitsinjektionsmittel zur Zufuhr der Flüssigkeit in den Krümmer stromaufwärts der Abgasbehandlungseinheit geeignet ist.

9. Fahrzeug nach Anspruch 8,
wobei die Abgasbehandlungseinheit (10) ein katalytischer SCR-Wandler ist, die Vorrichtung zur Injektion einer Harnstofflösung geeignet ist und das Druckgas Druckluft ist.

10. Verfahren zur Lieferung einer Flüssigkeit an einen Gasstrom in dem Abgaskrümmer eines Verbrennungsmotors, der einen Abgaskrümmer (9) aufweist, mittels einer Vorrichtung nach einem der Ansprüche 1 bis 7, umfassend, dass:
- die Flüssigkeit in den Liefertank (2) gepumpt wird,
- der Druck in dem Tank zu jedem Zeitpunkt auf einem vorbestimmten Pegel gemäß der Menge an in den Krümmer einzuführender Flüssigkeit ungeachtet des augenblicklichen Durchflusses, der durch die Pumpe (3) geliefert wird, beibehalten wird;
- die Flüssigkeit in den Gasstrom injiziert wird.

11. Verfahren nach Anspruch 10,
mit dem Schritt zum Aktivieren der Pumpe mittels eines geeigneten Pegelsteuersystems, das an den Liefertank (2) angebaut ist und ein Pumpen nur startet, wenn der Pegel in dem Tank unter einen gewissen Wert fällt, und stoppt, sobald der vordefinierte Pegel erreicht ist.

## Revendications

1. Dispositif de fourniture d'un liquide à un courant de gaz dans le collecteur de gaz d'échappement d'un moteur à combustion interne comprenant :
- un réservoir de stockage (1) et un réservoir d'alimentation (2) pour ledit liquide ;
- une pompe (3) pour transférer ledit liquide du réservoir de stockage au réservoir d'alimentation, ladite pompe (3) étant située sur une ligne de transfert (4) raccordant les deux réservoirs ;
- des moyens (11, 12) pour fournir un gaz comprimé audit réservoir d'alimentation comprenant
-- une source de gaz comprimé (12),
-- une ligne d'alimentation en gaz comprimé (11) raccordant le réservoir d'alimentation (2) avec la source de gaz comprimé (12),
- des moyens (7, 8, 17) pour injecter ledit liquide dans un collecteur de gaz (9) comprenant
-- une chambre de mélange (8), où ledit liquide est vaporisé et mélangé avec ledit gaz comprimé,
-- une ligne d'injection (7) raccordant le réservoir d'alimentation (2) avec la chambre de mélange (8),
-- une ligne (17) pour introduire ledit gaz comprimé dans la chambre de mélange (8),
-- des dispositifs de régulation d'écoulement de gaz (15) incorporés dans ladite ligne (17),
- des moyens pour empêcher un liquide de s'écouler du réservoir d'alimentation (2) au réservoir de stockage (1),
**caractérisé en ce que** lesdits moyens pour fournir ledit gaz comprimé audit réservoir d'alimentation comprennent en outre des moyens de régulation de pression (13) configurés pour maintenir la pression dans ledit réservoir d'alimentation à tout moment à un niveau prédéterminé selon la quantité de liquide à introduire dans le collecteur (9), indépendamment du débit instantané fourni par la pompe (3).

2. Dispositif selon la revendication 1, comprenant en outre une vanne d'ouverture-fermeture (16) incorporée dans ladite ligne d'injection (7) pour bloquer l'écoulement de liquide lorsque le système n'est pas utilisé.

3. Dispositif selon la revendication 1, dans lequel lesdits moyens permettant d'empêcher un liquide de s'écouler du réservoir d'alimentation (2) au réservoir de stockage (1) sont un clapet antiretour (5).

4. Dispositif selon la revendication 1, dans lequel ledit réservoir d'alimentation (2) comprend une vanne pour purger la pression du réservoir d'alimentation (2).

5. Dispositif selon l'une quelconque des revendications précédentes, dans lequel ledit liquide est l'urée et/ou ledit gaz est l'air.

6. Dispositif selon l'une quelconque des revendications précédentes, dans lequel lesdits dispositifs de régulation d'écoulement (15) sont une vanne.

7. Dispositif selon l'une quelconque des revendications précédentes, dans lequel ledit système de régulation de pression est une vanne de pression d'air (13) commandée par un circuit de commande spécifique.

8. Système de traitement de gaz d'échappement d'un véhicule, comprenant un collecteur (9) pour collecter les gaz d'échappement provenant d'un moteur à combustion interne, une unité de traitement de gaz d'échappement (10) agencée sur ledit collecteur, **caractérisé en ce qu'**il comprend un dispositif selon l'une quelconque des revendications précédentes, dans lequel les moyens d'injection de liquide sont appropriés pour délivrer le liquide dans ledit collecteur, en amont de l'unité de traitement de gaz d'échappement.

9. Véhicule selon la revendication 8, dans lequel ladite unité de traitement de gaz d'échappement (10) est un convertisseur catalytique SCR, ledit dispositif est approprié pour injecter une solution d'urée, et le gaz comprimé est l'air comprimé.

10. Procédé de fourniture d'un liquide à un courant de gaz dans le collecteur de gaz d'échappement d'un moteur à combustion interne comportant un collecteur de gaz d'échappement (9) au moyen d'un dispositif selon l'une quelconque des revendications 1 à 7, comprenant
- le pompage dudit liquide dans le réservoir d'alimentation (2),
- le maintien de la pression dans ledit réservoir à tout moment à un niveau prédéterminé selon la quantité de liquide à introduire dans le collecteur, indépendamment de l'écoulement instantané fourni par la pompe (3),
- l'injection dudit liquide dans ledit courant de gaz.

11. Procédé selon la revendication 10, comprenant l'étape consistant à activer la pompe au moyen d'un système de commande de niveau approprié adapté au réservoir d'alimentation (2), et à ne démarrer le pompage que lorsque le niveau dans le réservoir tombe sous une certaine valeur, et à l'arrêter une fois que le niveau prédéfini est atteint.
